(19) Europäisches Patentamt
European Patent Office
Office européen des brevets

(11) **EP 3 413 232 A1**

(12) **EUROPEAN PATENT APPLICATION**

(43) Date of publication:
**12.12.2018 Bulletin 2018/50**

(51) Int Cl.:
*G06K 9/00* (2006.01)          *G06T 7/12* (2017.01)

(21) Application number: **18166032.5**

(22) Date of filing: **06.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.06.2017   CN 201710431547**

(71) Applicant: **Ricoh Company Ltd.**
**Ohta-ku**
**Tokyo 143-8555 (JP)**

(72) Inventors:
• **HE, Na**
  **Haidian District, Beijing 100044 (CN)**

• **LIU, Dianchao**
  **Haidian District, Beijing 100044 (CN)**
• **SHI, Zhongchao**
  **Haidian District, Beijing 100044 (CN)**
• **WANG, Gang**
  **Haidian District, Beijing 100044 (CN)**

(74) Representative: **Watkin, Timothy Lawrence Harvey**
**Marks & Clerk LLP**
**Fletcher House**
**The Oxford Science Park**
**Heatley Road**
**Oxford OX4 4GE (GB)**

(54) **METHOD, DEVICE, AND APPARATUS FOR DETECTING ROAD DIVIDING OBJECT AS WELL AS COMPUTER PROGRAM AND NON-TRANSITORY COMPUTER-READABLE MEDIUM**

(57)     Disclosed is a method and device for detecting a road dividing object. The method includes an obtainment step of obtaining an image containing a target scene to be detected; an acquirement step of acquiring, by using a filter to process the image, a response value of each pixel point in the image along each direction of the filter; a calculation step of calculating, based on the response value of each pixel point in the image along each direction of the filter, a degree of contribution of each pixel point in the image toward a vanishing point; a determination step of determining the vanishing point based on the degree of contribution of each pixel point in the image toward the vanishing point; and a detection step of attaining a road dividing object detection result based on the vanishing point determined.

FIG.1

**Description**

BACKGROUND OF THE DISCLOSURE

1. Field of the Disclosure

The present disclosure relates to the field of image processing, and more especially relates to a method, device, and apparatus for detecting at least one object for dividing a road (hereinafter, also called a road dividing object) based on a vanishing point as well as the relevant computer program and non-transitory computer-readable medium.

2. Description of the Related Art

In the field of image processing, road dividing object detection plays a very important role in an advanced driver assistant system (ADAS). For example, detecting a road dividing object such as a white or yellow lane marking, a road shoulder made of stone, a fence, a median strip, or the like may not only provide information such as the position of a vehicle on a road, the number of lanes, the width of each lane, and so on but also be applied to applications in the ADAS system such as lane departure warning and so forth.

Many road dividing object detection approaches have been proposed in conventional techniques up to now. These types of approaches may be mainly divided into feature based approaches and model based approaches. Generally speaking, the model based approaches are more stable than the feature based approaches. At present, the most widely used approaches are model based local-to-global detection.

However, this kind of local-to-global detection is a process from a point to a model, i.e., a local but non-global optimum process. If the feature of the point is not accurate, then an accumulative error may occur from the point related processing, thereby resulting in an incorrect detection result.

SUMMARY OF THE DISCLOSURE

In light of the above, a method, device, and apparatus for detecting at least one road dividing object based on a vanishing point as well as the related computer program and non-transitory computer-readable medium are provided.

According to a first aspect of the present disclosure, a method of detecting a road dividing object is provided. The method includes an obtainment step of obtaining an image containing a target scene waiting for processing; an acquirement step of acquiring, by using a filter to process the image, a response value of each pixel point in the image along each direction of the filter; a calculation step of calculating, based on the response value of each pixel point in the image along each direction of the filter, a degree of contribution of each pixel point in the image toward a vanishing point; a determination step of determining the vanishing point based on the degree of contribution of each pixel point in the image toward the vanishing point; and a detection step of attaining a road dividing object detection result based on the vanishing point determined.

According to a second aspect of the present disclosure, a device for detecting a road dividing object is provided. The device includes an obtainment part configured to obtain an image containing a target scene to be detected; an acquirement part configured to acquire, by using a filter to process the image, a response value of each pixel point in the image along each direction of the filter; a calculation part configured to calculate, based on the response value of each pixel point in the image along each direction of the filter, a degree of contribution of each pixel point in the image toward a vanishing point; a determination part configured to determine the vanishing point based on the degree of contribution of each pixel point in the image toward the vanishing point; and a detection part configured to attain a road dividing object detection result based on the vanishing point determined.

According to a third aspect of the present disclosure, an apparatus for detecting at least one road dividing object is provided which includes a storage storing computer-executable instructions; and a processor connected to the storage. The processor is configured to implement the computer-executable instructions so as to achieve the method.

According to a fourth aspect of the present disclosure, a computer program for causing a computer to conduct the method is provided.

According to a fifth aspect of the present disclosure, a non-transitory computer-readable medium storing computer-executable instructions for execution by a processor is provided. The computer-executable instructions, when executed, may cause the processor to carry out the method.

By making use of the method, device, and apparatus described above, because a vanishing point is found from all the pixel points in an image so as to perform a global optimal process of road dividing object detection, the accumulative error problem existing in the conventional local optimal process of road dividing object detection may be solved. As a result, it is possible to generate a more accurate detection result.

BRIEF DESCRIPTION OF THE DRAWINGS

FIG. 1 is a flowchart of a road dividing object detection method according to a first embodiment of the present disclosure;

FIG. 2 is a flowchart of a process able to compute the degree of contribution of each pixel point in an image toward a vanishing point;

FIG. 3 is a flowchart of a process capable of determining a vanishing point based on the degree of contribution of each pixel point in an image toward the vanishing point;

FIG. 4 exemplarily illustrates a plurality of lane markings in an image intersecting at a vanishing point therein;

FIG. 5 is a block diagram of a road dividing object detection device in accordance with a second embodiment of the present disclosure; and

FIG. 6 is a block diagram of an apparatus for detecting at least one road dividing object according to a third embodiment of the present disclosure.

DETAILED DESCRIPTION OF THE PREFERRED EMBODIMENTS

In order to let a person skilled in the art better understand the present disclosure, hereinafter, the embodiments of the present disclosure will be concretely described with reference to the drawings. However it should be noted that the same symbols, which are in the specification and drawings, stand for the constructional elements having basically the same function and structure, and the repeated explanations to the constructional elements are omitted.

First the basic idea of the present disclosure is briefly introduced as follows.

As is well known, a set of parallel straight lines converge at a point at infinity in theory (for more information, see https://en.wikipedia.org/wiki/Point_at_infinity). Additionally, in an actually captured image, a group of parallel straight lines have one and only one intersection on the image plane, which is called a vanishing point (for more information, see https://en.wikipedia.org/wiki/Vanishing_point). For this reason, road dividing objects in an image such as lane markings and the like should intersect at a vanishing point, and the pixel points on the road dividing objects should contribute to the vanishing point. If it is possible to determine the vanishing point, then all the pixel points contributing toward the vanishing point should belong to the road dividing objects. Therefore, a method, device, and apparatus for detecting at least one road dividing object based on a vanishing point is proposed in the present disclosure.

Next a few preferable embodiments are given as below.

<First Embodiment>

A method of detecting at least one road dividing object is provided in this embodiment.

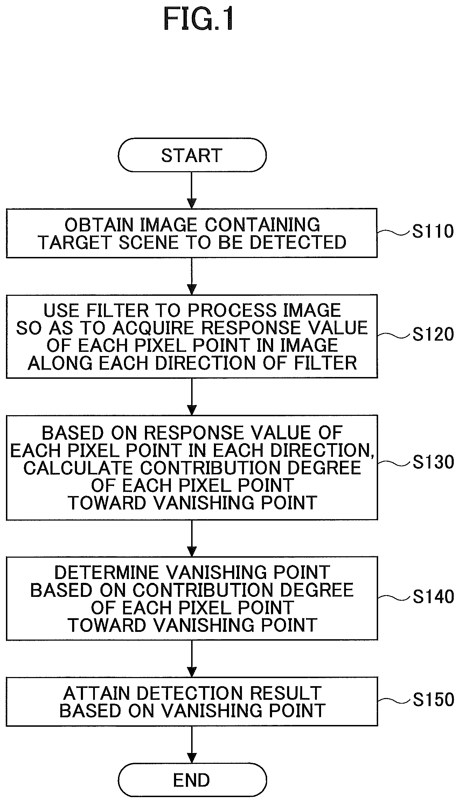

FIG. 1 is a flowchart of a road dividing object detection method according to this embodiment.

The road dividing detection method may be executed by an electronic apparatus having a processing ability, for example, a computer, a control station (e.g., the control center of a vehicle), or a server. Moreover, the road dividing objects may include, but are not limited to white or yellow lane markings, road shoulders made of stone, fences, median strips, etc.

As presented in FIG. 1, the road dividing object detection method contains STEPS S110 to S150.

In STEP S110 of FIG. 1, an image including a target scene waiting for detection is obtained.

It is possible to use a camera to photograph the target scene to be detected in real time so as to acquire an image that may be a color image, a grayscale image, a disparity map (depth map), etc. As an illustration, a grayscale image of a target scene is attained which involves one or more lane markings. Of course, a person skilled in the art may understand that the above-mentioned types of images are just exemplary ones. That is, the road dividing object detection method in accordance with this embodiment is not limited to this. Furthermore, although at least one lane marking is taken as an example for description, the road dividing object detection method according to this embodiment is also not limited to this.

Optionally, pre-processing may be performed on the image of the target scene so as to remove the negative influence caused by background and noise. For instance, it is possible to carry out Sobel edge detection with respect to the grayscale image so as to eliminate the pixel points on each edge whose amplitude is within a predetermined range, and delete those isolated pixel points. Of course, this is just an illustration of image pre-processing. In other words, it is also possible to utilize any other conventional background and noise removal approach such as an image segmentation based approach or the like to fulfill image pre-processing.

Next, in STEP S120 of FIG. 1, a filter is employed to process the image so as to acquire a response value of each pixel point in the image along each direction of the filter.

In an example, a Gabor filter is utilized to process the image, which may conduct edge extraction when performing image processing (in a spatial domain, a two dimensional (2D) Gabor filter is a Gaussian kernel function modulated by a sinusoidal plane wave). Additionally, the impulse response of the Gabor filter may be defined as a sinusoidal wave (in a case of a 2D Gabor filter, a sinusoidal plane wave) multiplied by a Gaussian function. Due to the characteristics of multiplicative convolution, the Fourier transform of the impulse response of the Gabor filter is the convolution of the Fourier transform of a harmonic function and the Fourier transform of a Gaussian function. Such a Gabor filter is composed of an imaginary part and a real part which are orthogonal to each other. A Gabor function having a group of different frequencies and directions may be adopted to carry out image feature extraction.

The complex number based expression of a 2D Gabor function is as follows.

$$g(x, y; \lambda, \theta, \psi, \sigma, \gamma) = \exp\left(-\frac{x'^2 + \gamma^2 y'^2}{2\sigma^2}\right) \exp\left(i\left(2\pi\frac{x'}{\lambda} + \psi\right)\right) \quad (1)$$

The real part and imaginary part may be expressed by the following equations (2) and (3), respectively.

$$g(x, y; \lambda, \theta, \psi, \sigma, \gamma) = \exp\left(-\frac{x'^2 + \gamma^2 y'^2}{2\sigma^2}\right) \cos\left(2\pi\frac{x'}{\lambda} + \psi\right) \quad (2)$$

$$g(x, y; \lambda, \theta, \psi, \sigma, \gamma) = \exp\left(-\frac{x'^2 + \gamma^2 y'^2}{2\sigma^2}\right) \sin\left(2\pi\frac{x'}{\lambda} + \psi\right) \quad (3)$$

Here, $x'=x\cos\theta+y\sin\theta$, and $y'=-x\sin\theta+y\cos\theta$.

In addition, $\lambda$ refers to a wavelength whose value is designated in pixels, and is usually greater than or equal to two, but cannot be greater than one fifth of the size of an input image (in fact, its reciprocal number (frequency) is used, and the frequency f is greater than or equal to 0.2); $\theta$ is a direction related parameter representing the direction of the Gabor kernel function, whose value is from 0 to 360 degrees; $\phi$ stands for a phase offset whose value is from -180 to +180 degrees (here, 0 and 180 degrees correspond to a center-on function and a center-off function which are centrosymmetric, and -90 and +90 degrees correspond to an anti-symmetric function); $\gamma$ means a spatial aspect ratio that determines the ellipticity of the shape of the Gabor function (i.e., when $\gamma=1$, the shape is a circle, and when $\gamma<1$, the shape is elongated in a parallel stripe direction); and $\sigma$ is indicative of the standard deviation of a Gaussian function.

Here it should be noted that for more information about the Gabor filter, it is also possible to see https://en.wikipedia.org/wiki/Gabor_filter.

In an example, the whole angular region (0 to 180 degrees) may be equally divided into a predetermined number of angular intervals (e.g., N angular intervals). The angular directions of the N angular intervals may serve as N directions of the Gabor filter. Here, N may be a divisor of 180, for instance, 10 or 18. The angular direction of each angular interval may be expressed by an angle within the corresponding angular interval, for example, the minimum angle or the median angle.

For each pixel point in the image obtained in STEP S110 of FIG. 1, it is possible to make use of the equations (1) to (3) to calculate the response value of the same pixel point within each angular interval of the Gabor filter so as to be the response value of the same pixel point in each direction of the Gabor filter. Here it may be understood that in this example, the response value of a pixel point in the image along a direction of the Gabor filter may be adopted to evaluate the edge feature of the pixel point in this direction.

In this way, it is possible to acquire the response value of each pixel point in the image along each direction of the filter.

Referring again to FIG. 1; in STEP S130, for each pixel point in the image, its degree of contribution toward a vanishing point is calculated on the basis of the response value of the same pixel point in each direction of the filter. As set forth above, lane markings in an image should intersect at a vanishing point, so all the pixel points on the lane markings should contribute to the vanishing point. In other words, the larger the degree of contribution of a pixel point toward a vanishing point is, the higher the possibility of the pixel point on a lane marking becomes.

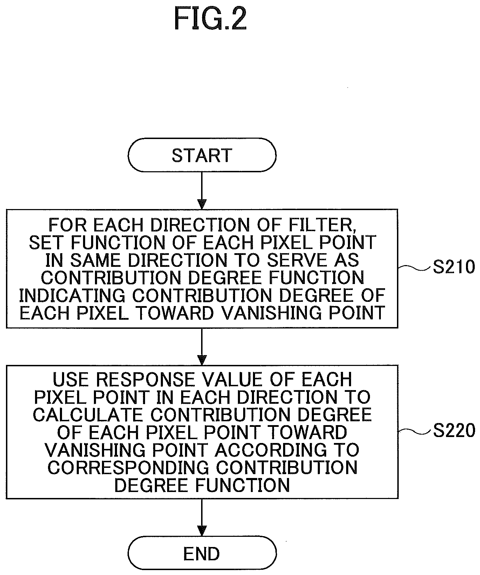

FIG. 2 is a flowchart of a process able to compute the degree of contribution of each pixel point in an image toward a vanishing point.

As shown in FIG. 2, the process includes STEPS S210 and S220.

In STEP S210 of FIG. 2, for each direction of the filter, a function of the response value of each pixel point in the image along the corresponding direction is set so as to serve as a contribution degree function indicating the degree of contribution of the same pixel point toward the vanishing point.

Since a lane marking in the image has an edge feature, and because the response value of each pixel point in each direction of the filter may reflect the edge feature of the same pixel point, it is possible to take advantage of the response value of each pixel point in the image along each direction of the filter so as to gain the degree of contribution of the same pixel point toward the vanishing point.

Hence, in an example, the contribution degree function may be defined as *f(response)*. Here, *response* is the response value of each pixel point in a direction of the filter. Such a variable may reflect the edge feature of the related lane marking, so it is also called an edge feature. The larger its value is, the higher the probability of the corresponding pixel point on the related lane marking is, and the larger the degree of contribution of the corresponding pixel point toward the vanishing point is, i.e., the larger the value of the contribute degree function *f(response)* becomes.

Aside from the edge feature, a lane marking in the image may also have features such as a grayscale feature, a continuity feature, a height feature, and so on.

Thus, in another example, the contribution degree function may also be defined as *f(response, gray, continuity, height)*.

Here, *gray* refers to the gray level of a pixel point (or the average value of the gray levels of its neighborhoods). Because it is easy to acquire this kind of gray level from a grayscale image for a person skilled in the art, the relevant descriptions are omitted for the sake of convenience. This kind of a variable may reflect the grayscale feature of the related lane marking. The larger its value is, the higher the probability of the pixel point on the related lane marking is, and the larger the degree of contribution of the pixel point toward the vanishing point is, i.e., the larger the value of the contribution degree function *f(response, gray, continuity, height)* becomes.

Moreover, *continuity* stands for the continuity of a pixel point, i.e., the number of pixel points having a similar edge direction in its neighboring region. For a person skilled in the art, it is easy to procure this kind of continuity feature from a grayscale image, so the relevant descriptions are omitted for the sake of convenience. Such a variable may reflect the continuity of the related lane marking. The larger its value is, the higher the probability of the pixel point on the related lane marking, and the larger the degree of the pixel point toward the vanishing point is, i.e., the larger the value of the contribution degree function *f(response, gray, continuity, height)* becomes.

Furthermore, *height* is indicative of the height from a pixel point to the relevant road surface. This type of a variable may reflect the depth feature of the related lane marking. Since it is easy to attain this kind of depth feature from a depth (disparity) map for a person skilled in the art, the related descriptions are also omitted for the sake of convenience. In general, a lane marking is located on a road surface, so the probability of a pixel point above the road surface belonging to the lane marking is very low. In other words, the larger the value of the variable *height* is, the larger the height from the pixel point to the relevant road surface is, and the lower the probability of the pixel point on the related lane marking, i.e., the smaller the value of the contribution degree function *f(response, gray, continuity, height)* becomes.

In light of the above, the contribution degree function may be expressed as follows.

$$f(response,\ gray,\ continuity,\ height)=response*gray*continuity/height \qquad (4)$$

Additionally, except the edge feature, the grayscale feature, the continuity feature, and the height feature, in still another example, it is also possible to add other parameters in the contribution degree function, for instance, the number of pixel points contributing to the vanishing point in each direction.

Of course, the contribution degree function available to the embodiments of the present disclosure is not limited to the examples discussed above. In other words, some parameters may be added in or deleted from the contribution degree function, or other forms of expression of the contribution degree function may be adopted, as long as it is possible to reflect the influence of the relevant parameters on the degree of contribution toward the vanishing point.

After building the contribution degree function, in STEP S220 of FIG. 2, the response value of each pixel point in the image along each direction of the filter may be utilized so as to calculate the degree of contribution of the same point toward the vanishing point on the basis of the contribution degree function.

Referring again to FIG. 1; in STEP S140, the vanishing point is determined based on the degree of contribution of each pixel point toward the vanishing point.

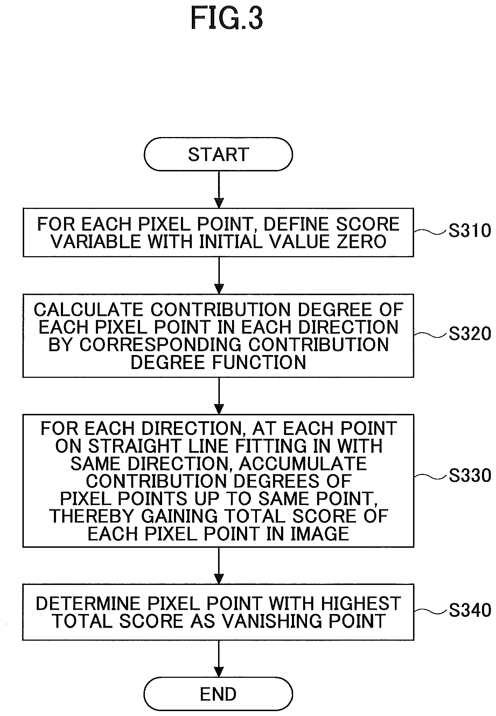

FIG. 3 is a flowchart of a process capable of determining the vanishing point.

As indicated in FIG. 3, the process contains STEPS S310 to S340.

In STEP S310 of FIG. 3, for each pixel point in the image, a score variable is defined whose initial value is zero.

In STEP S320 of FIG. 3, the degree of contribution of each pixel point in the image toward the vanishing point in each direction of the filter is obtained. Here it is possible to make use of the degree of contribution of each pixel point in the image toward the vanishing point along each direction of the filter calculated in STEP S220 of FIG. 2.

In STEP S330 of FIG. 3, for each direction of the filter, at each pixel point on a straight line determined by means of each pixel point in the image and the corresponding direction, the degrees of contribution of the pixel points up to the same point pixel along the corresponding direction are accumulated to update the value of the corresponding score variable, thereby being able to acquire the total score of the same pixel point.

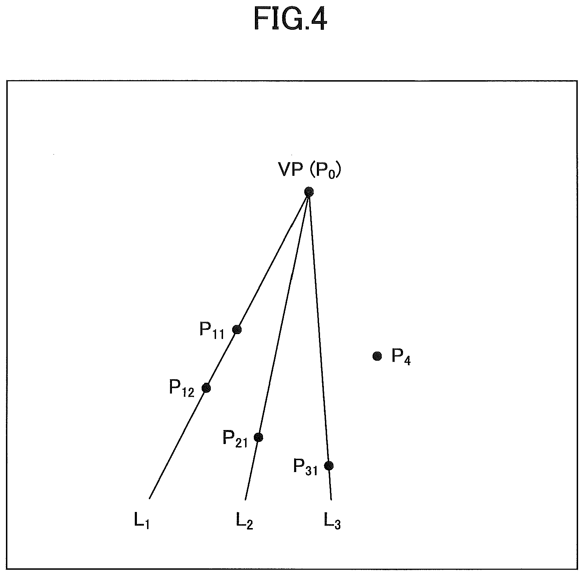

FIG. 4 exemplarily illustrates a plurality of lane markings in an image intersecting at a vanishing point therein.

As shown in FIG. 4, there are three lane markings $L_1$, $L_2$, and $L_3$ intersecting at a vanishing point VP. Pixel points $P_{11}$, $P_{21}$, and $P_{31}$ are located on the three lane markings $L_1$, $L_2$, and $L_3$, respectively. For the sake of convenience, it is assumed that the example in this drawing corresponds to a case where the directions of the filter include the directions of the three lane markings $L_1$, $L_2$, and $L_3$. Accordingly, the pixel points $P_{11}$, $P_{21}$, and $P_{31}$ contribute to the vanishing point VP only in their respective lane marking directions; that is, they do not contribute toward the vanishing point VP along the other directions of the filter different from the directions of the three lane markings $L_1$, $L_2$, and $L_3$.

In this circumstance, all the pixel points on the lane marking $L_1$ contribute to the vanishing point VP. Here it is supposed that there are m pixel points $P_{11}$, $P_{12}$, ..., $P_{1m}$ on the lane marking $L_1$, and the degrees of contribution of the respective pixel points $P_{11}$, $P_{12}$, ..., $P_{1m}$ toward the vanishing point VP in the direction of the lane marking $L_1$ are $p_{11}$, $p_{12}$, ..., $p_{1m}$. Because the degrees of contribution of the respective pixel points $P_{11}$, $P_{12}$, ..., $P_{1m}$ toward the vanishing point VP along the directions of the filter different from the direction of the lane marking $L_1$ are nearly zero, when calculating the score of each of the pixel points $P_{11}$, $P_{12}$, ..., $P_{1m}$, it is possible to accumulate the degrees of contribution of the pixel points up to the corresponding pixel point in the direction of the lane marking $L_1$. If the pixel point $P_{11}$ is taken as an example, then the score of the $P_{11}$ should be $p_1 = p_{11} + p_{12} + \cdots + p_{1m}$. Similarly if it is assumed that there are n pixel points $P_{21}$, $P_{22}$, ..., $P_{2n}$ on the lane marking $L_2$, and the degrees of contribution of the respective pixel points $P_{21}$, $P_{22}$, ..., $P_{2n}$ toward the vanishing point VP in the direction of the lane marking $L_2$ are $p_{21}$, $p_{22}$, ..., $p_{2n}$, then the score of the pixel point $P_{21}$ should be $p_2 = p_{21} + p_{22} + \cdots + p_{2n}$, for instance. Moreover, in like manner, it is also possible to procure the score of the pixel point $P_{31}$ on the lane marking $L_3$, i.e., $p_3 = p_{31} + p_{32} + \cdots + p_{3q}$, for example.

In addition, it may be understood that in FIG. 4, the pixel $P_4$ is not located on any one of the three lane markings $L_1$, $L_2$, and $L_3$, so it does not contribute to the vanishing point VP along the directions of the three lane markings $L_1$, $L_2$, and $L_3$; that is, its degree of contribution toward the vanishing point VP is zero.

Here if it is supposed that in FIG. 4, there is a pixel point $P_0$ located at the position of the vanishing point VP, then it should be located on the three lane markings $L_1$, $L_2$, and $L_3$. In other words, the pixel point $P_0$ contributes to the vanishing point VP in the directions of the three lane markings $L_1$, $L_2$, and $L_3$. Thus the total score of the pixel point $P_0$ located at the position of the vanishing point VP should be $p_0 = p_1 + p_2 + p_3$.

It is obvious from the above that the total score of a pixel point located at the position of the vanishing point VP should be highest. Hence, in STEP S340 of FIG. 3, a pixel point whose total score is highest may be determined as the vanishing point.

Here it should be noted that in the example indicated in FIG. 4, it is assumed that the directions of the filter include the directions of the three lane markings $L_1$, $L_2$, and $L_3$. In actuality, one or more lane marking directions may not be included in the directions of the filter. That is, a pixel point on a lane marking may contribute to the vanishing point in one or more directions of the filter which are roughly the same as the direction of the lane marking. However, even in this case, the total score of the pixel on the lane marking is still the sum of its respective accumulated scores along the one or more directions of the filter.

Additionally it is also apparent for a person skilled in the art that the directions of the filter may be further divided so as to obtain a more accurate result if there is no need for concern regarding the amount of calculation.

Referring again to FIG. 1; in STEP S150, it is possible to acquire a road dividing object detection result on the basis of the vanishing point determined.

Particularly, in an example, as set forth above, the vanishing point is attained by utilizing the degree of contribution of each pixel in the image toward the vanishing point, so, after gaining the vanishing point, it is possible to obtain all the pixel points contributing to the vanishing point and the relevant directions. Accordingly, on the basis of all the pixel points contributing to the vanishing point and the relevant directions, a straight line(s) may be procured which corresponds to at least one road dividing object. That is, it is possible to acquire the road dividing object detection result.

Alternatively, in another example, after all the pixel points contributing to the vanishing point and the relevant directions are obtained, a filtering process may be conducted with respect to them so as to remove noise, and then, it is possible to take advantage of those pixel points and directions after filtering to acquire the road dividing object detection result.

Here it should be noted that the filtering process may be achieved by adopting any conventional techniques such as filtering based on the number of pixel points on a straight line, filtering based on a width constraint of a lane marking, and so on and so forth.

Up to here, the method of detecting at least one road dividing object in accordance with this embodiment has been illustrated in detail by referring to FIGS. 1 to 4. Since this method is seeking a vanishing point from all the pixel points in an image so as to carry out a global optimal process of road dividing object detection, it is possible to overcome the accumulative error problem existing in the conventional local optimal process of road dividing object detection, thereby being able to make the detection result more accurate.

<Second Embodiment>

In this embodiment, a device for detecting at least one road dividing object is given which may carry out the road dividing object detection method according to the first embodiment.

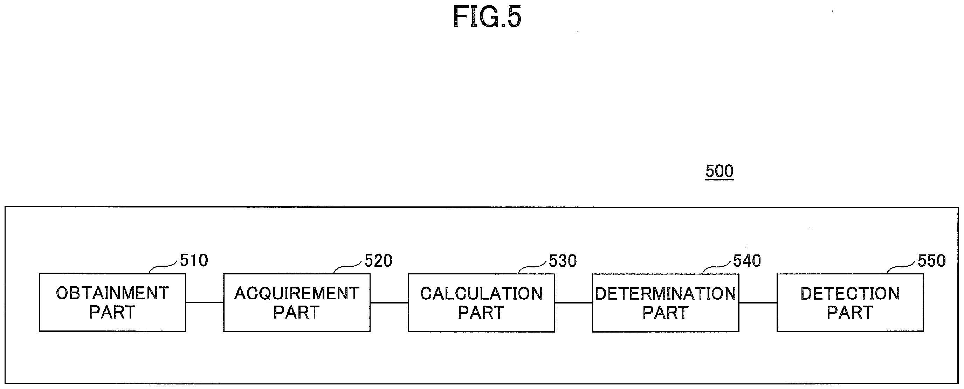

FIG. 5 is a block diagram of a road dividing object detection device 500 in accordance with this embodiment.

As presented in FIG. 5, the road dividing object detection device 500 is inclusive of an obtainment part 510, an acquirement part 520, a calculation part 530, a determination part 540, and a detection part 540.

The obtainment part 510 is used to obtain an image containing a target scene waiting for detection, i.e., execute STEP S110 of FIG. 1.

The acquirement part 520 is utilized to process the image by way of a filter so as to acquire a response value of each pixel point in the image along each direction of the filter, i.e., implement STEP S120 of FIG. 1.

The calculation part 530 is employed to calculate, on the basis of the response value of each pixel point in the image along each direction of the filter, a degree of contribution of the same pixel point toward a vanishing point, i.e., conduct STEP S130 in FIG. 1.

The determination part 540 is configured to determine the vanishing point based on the degree of contribution of each pixel point in the image toward the vanishing point, i.e., perform STEP S140 of FIG. 1.

The detection part 550 is adopted to attain a road dividing object detection result on the basis of the vanishing point determined, i.e., carry out STEP S150 in FIG. 1.

In addition, the road dividing object detection device 500 may further contain a filtering part (not shown in the drawings) which is configured to perform a filtering process on all the pixel points contributing to the vanishing point and the relevant direction acquired so as to obtain a more accurate road dividing object detection result.

Here it should be noted that since the details of STEPS S110 to S150 of FIG. 1 have been described in the first embodiment, they are omitted here for the sake of convenience.

In the road dividing object detection device 500 according to this embodiment, because a vanishing point is sought from all the pixel points in an image so as to carry out a global optimal process of road dividing object detection, it is possible to avoid the accumulative error problem existing in the conventional local optimal process of road dividing object detection, thereby being capable of rendering the detection result more accurate.

<Third Embodiment>

An apparatus for detecting at least one road dividing object is provided in this embodiment.

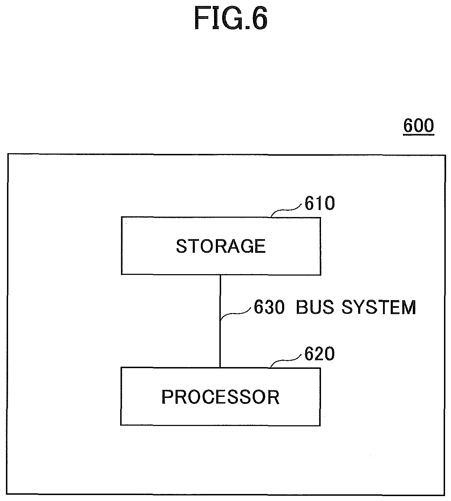

FIG. 6 is a block diagram of an apparatus 600 for detecting at least one road dividing object according to this embodiment.

As shown in FIG. 6, the apparatus 600 contains a storage 610 and a processor 620 which are connected with each other via a bus system 630.

The storage 610 may store requisite programs and data as well as the intermediate results generated when the processor 620 conducts application programs, for example. Here a computer-executable program able to fulfil the road dividing object detection method according to the first embodiment is stored in the storage 610.

Moreover, the processor 620 is configured to implement, for instance, the computer-executable program stored in the storage 610 so as to achieve the road dividing object detection method in accordance with the first embodiment. Of course, other programs may also be executed by the processor 620.

<Fourth Embodiment>

In this embodiment, a computer program and a non-transitory computer-readable medium are briefly described as follows.

The computer program may cause a computer to conduct the road dividing object detection method in accordance with the first embodiment.

Furthermore, the non-transitory computer-readable medium may store computer-executable instructions (i.e., the computer program) for execution by a computer including a processor(s) or processing system. The computer-executable instructions, when executed, may render the processor(s) or processing system to perform the road dividing object detection method according to the first embodiment.

It should be noted that the above embodiments are just exemplary ones, and the specific structure and operation of them may not be used for limiting the present disclosure.

Moreover, the embodiments of the present disclosure may be implemented in any convenient form, for example, using dedicated hardware or a mixture of dedicated hardware and software. The embodiments of the present disclosure may be implemented as computer software implemented by one or more networked processing apparatuses. The network may comprise any conventional terrestrial or wireless communications network, such as the Internet. The processing apparatuses may comprise any suitably programmed apparatuses such as a general-purpose computer, a personal digital assistant, a mobile telephone (such as a WAP or 3G-compliant phone) and so on. Since the embodiments of the present disclosure can be implemented as software, each and every aspect of the present disclosure thus encompasses computer software implementable on a programmable device.

The computer software may be provided to the programmable device using any storage medium for storing processor-readable code such as a floppy disk, a hard disk, a CD ROM, a magnetic tape device or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of storing a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

While the present disclosure is described with reference to the specific embodiments chosen for purpose of illustration, it should be apparent that the present disclosure is not limited to these embodiments, but numerous modifications could be made thereto by those people skilled in the art without departing from the basic concept and technical scope of the present disclosure.

The present application is based on and claims the benefit of priority of Chinese Patent Application No. 201710431547.0 filed on June 9, 2017, the entire contents of which are hereby incorporated by reference.

**Claims**

1. A method of detecting at least one road dividing object, comprising:

   an obtainment step of obtaining an image containing a target scene to be detected;
   an acquirement step of acquiring, by using a filter to process the image, a response value of each pixel point in the image along each direction of the filter;
   a calculation step of calculating, based on the response value of each pixel point in the image along each direction of the filter, a degree of contribution of each pixel point in the image toward a vanishing point;
   a determination step of determining the vanishing point based on the degree of contribution of each pixel point in the image toward the vanishing point; and
   a detection step of attaining a road dividing object detection result based on the vanishing point determined.

2. The method according to claim 1, wherein, the calculation step includes
   for each direction of the filter, setting a function of the response value of each pixel point in the image along the same direction to serve as a contribution degree function indicating the degree of contribution of each pixel in the image along the same direction toward the vanishing point; and
   for each direction of the filter, utilizing the response value of each pixel in the image along the same direction to compute the degree of contribution of each pixel point in the image along the same direction based on the corresponding contribution degree function.

3. The method according to claim 2, wherein, the contribution degree function is a function of an edge feature, a grayscale feature, a continuity feature, and a height feature.

4. The method according to claim 2 or 3, wherein, the determination step includes
   for each pixel point in the image, defining a score variable whose initial value is zero;
   for each direction of the filter, computing the degree of contribution of each pixel point in the image along the same direction by way of the corresponding contribution degree function;
   for each direction of the filter, at each pixel point on a straight line determined based on each pixel point in the image and the same direction, accumulating the degrees of contribution of the pixel points up to the same pixel point on the straight line in the same direction to update the value of the score variable of the same pixel point, thereby gaining a total score of each pixel point in the image; and

determining a pixel point whose total score is highest as the vanishing point.

5. The method according to claim 1, wherein, the detection step includes

obtaining, based on the vanishing point determined, pixel points contributing to the vanishing point and a relevant direction(s); and

acquiring a straight line(s) based on the pixel points contributing to the vanishing point and the relevant direction(s) to be the at least one road dividing object.

6. The method according to claim 5, wherein, the detection step further includes

performing a filtering process on the pixel points contributing to the vanishing point and the relevant direction(s) so as to attain filtered pixel points and a filtered relevant direction(s); and

determining a straight line(s) based on the filtered pixel points and the filtered relevant direction(s) to be the at least one road dividing object.

7. The method according to claim 1, wherein, the filter is a Gabor filter.

8. The method according to claim 7, wherein, the acquirement step includes

dividing an angular region within a range of 0 to 180 degrees into a predetermined number of angular intervals, and gaining the response value of each pixel point in the image in each angular interval to serve as the response value of each pixel point in the image along each direction of the Gabor filter.

9. A device for detecting at least one road dividing object, comprising:

an obtainment part configured to obtain an image containing a target scene to be detected;

an acquirement part configured to acquire, by using a filter to process the image, a response value of each pixel point in the image along each direction of the filter;

a calculation part configured to calculate, based on the response value of each pixel point in the image along each direction of the filter, a degree of contribution of each pixel point in the image toward a vanishing point;

a determination part configured to determine the vanishing point based on the degree of contribution of each pixel point in the image toward the vanishing point; and

a detection part configured to attain a road dividing object detection result based on the vanishing point determined.

10. An apparatus for detecting at least one road dividing object, comprising:

a storage storing computer-executable instructions; and

a processor connected to the storage,

wherein, the computer-executable instructions, when executed, cause the processor to conduct the method according to claim 1.

11. A computer program for causing a computer to carry out the method according to claim 1.

12. A non-transitory computer-readable medium storing computer-executable instructions for execution by a processor, wherein, the computer-executable instructions, when executed, cause the processor to carry out the method according to claim 1.

# FIG.1

START

OBTAIN IMAGE CONTAINING
TARGET SCENE TO BE DETECTED — S110

USE FILTER TO PROCESS IMAGE
SO AS TO ACQUIRE RESPONSE VALUE
OF EACH PIXEL POINT IN IMAGE — S120
ALONG EACH DIRECTION OF FILTER

BASED ON RESPONSE VALUE OF
EACH PIXEL POINT IN EACH DIRECTION,
CALCULATE CONTRIBUTION DEGREE — S130
OF EACH PIXEL POINT
TOWARD VANISHING POINT

DETERMINE VANISHING POINT
BASED ON CONTRIBUTION DEGREE
OF EACH PIXEL POINT — S140
TOWARD VANISHING POINT

ATTAIN DETECTION RESULT
BASED ON VANISHING POINT — S150

END

10

# FIG.2

START

FOR EACH DIRECTION OF FILTER, SET FUNCTION OF EACH PIXEL POINT IN SAME DIRECTION TO SERVE AS CONTRIBUTION DEGREE FUNCTION INDICATING CONTRIBUTION DEGREE OF EACH PIXEL TOWARD VANISHING POINT ~S210

USE RESPONSE VALUE OF EACH PIXEL POINT IN EACH DIRECTION TO CALCULATE CONTRIBUTION DEGREE OF EACH PIXEL POINT TOWARD VANISHING POINT ACCORDING TO CORRESPONDING CONTRIBUTION DEGREE FUNCTION ~S220

END

# FIG.3

START

FOR EACH PIXEL POINT, DEFINE SCORE VARIABLE WITH INITIAL VALUE ZERO ～S310

CALCULATE CONTRIBUTION DEGREE OF EACH PIXEL POINT IN EACH DIRECTION BY CORRESPONDING CONTRIBUTION DEGREE FUNCTION ～S320

FOR EACH DIRECTION, AT EACH POINT ON STRAIGHT LINE FITTING IN WITH SAME DIRECTION, ACCUMULATE CONTRIBUTION DEGREES OF PIXEL POINTS UP TO SAME POINT, THEREBY GAINING TOTAL SCORE OF EACH PIXEL POINT IN IMAGE ～S330

DETERMINE PIXEL POINT WITH HIGHEST TOTAL SCORE AS VANISHING POINT ～S340

END

# FIG.4

VP ($P_0$)

$P_{11}$

$P_4$

$P_{12}$

$P_{21}$

$P_{31}$

$L_1$          $L_2$          $L_3$

FIG.5

500

| 510 | 520 | 530 | 540 | 550 |
|---|---|---|---|---|
| OBTAINMENT PART | ACQUIREMENT PART | CALCULATION PART | DETERMINATION PART | DETECTION PART |

# FIG.6

<u>600</u>

610

STORAGE

630 BUS SYSTEM

620

PROCESSOR

Europäisches
Patentamt

European
Patent Office

Office européen
des brevets

# EUROPEAN SEARCH REPORT

Application Number

EP 18 16 6032

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHENGYAN ZHOU ET AL: "A novel lane detection based on geometrical model and Gabor filter", INTELLIGENT VEHICLES SYMPOSIUM (IV), 2010 IEEE, IEEE, PISCATAWAY, NJ, USA, 21 June 2010 (2010-06-21), pages 59-64, XP031732248, ISBN: 978-1-4244-7866-8 * page 59 - page 63 * ----- | 1-12 | INV. G06K9/00 G06T7/12 |
| L | RASMUSSEN C: "Grouping dominant orientations for ill-structured road following", PROCEEDINGS OF THE 2004 IEEE COMPUTER SOCIETY CONFERENCE ON COMPUTER VISION AND PATTERN RECOGNITION 27 JUNE-2 JULY 2004 WASHINGTON, DC, USA, IEEE, PROCEEDINGS OF THE 2004 IEEE COMPUTER SOCIETY CONFERENCE ON COMPUTER VISION AND PATTERN RECOGNITION IEE, vol. 1, 27 June 2004 (2004-06-27), pages 470-477, XP010708805, DOI: 10.1109/CVPR.2004.1315069 ISBN: 978-0-7695-2158-9 * page 471 - page 473 * ----- | 2-4,8 | |
| A | HUI KONG ET AL: "General Road Detection From a Single Image", IEEE TRANSACTIONS ON IMAGE PROCESSING, IEEE SERVICE CENTER, PISCATAWAY, NJ, US, vol. 19, no. 8, August 2010 (2010-08), pages 2211-2220, XP011328592, ISSN: 1057-7149, DOI: 10.1109/TIP.2010.2045715 * abstract * * page 2212 - page 2214 * ----- | 1-12 | TECHNICAL FIELDS SEARCHED (IPC)<br>G06K<br>G06T |

The present search report has been drawn up for all claims

| Place of search | Date of completion of the search | Examiner |
|---|---|---|
| Munich | 1 August 2018 | Maier, Werner |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710431547